# EUROPEAN PATENT APPLICATION

(11) **EP 4 794 223 A2**
(43) Date of publication of application: **19.08.2026**
(21) Application number: 26154084.3
(22) Date of filing: 26.01.2026
(51) Int. Cl.: H04B 7/185

(54) **APPARATUSES, COMPUTER-IMPLEMENTED METHODS, AND COMPUTER PROGRAM PRODUCTS FOR COMMON FRONT END RADIOFREQUENCY HARDWARE FOR MULTIPLE NETWORKS**

(30) Priority: 18.02.2025 IN 202511013826; 13.05.2025 US 202519206485
(71) Applicant: Honeywell International Inc., Charlotte, NC 28202 (US)
(72) Inventor: PESEK, Kamil, Charlotte, 28202 (US); CHIVUKULA, Rajesh, Charlotte, 28202 (US); ZAW, Aung, Charlotte, 28202 (US); RANA, Narayan Singh, Charlotte, 28202 (US)
(74) Representative: Haseltine Lake Kempner LLP

(57) **Abstract**

Embodiments of the disclosure provide for improving electronically steerable antenna configurations. In the context of an antenna, the antenna includes a diplexer comprising a first port connected to a transceiver path configured to operate in a first mode of operation corresponding to a first set of frequencies and a second port connected to a receiver path configured to operate in a second mode of operation corresponding to a second set of frequencies. The antenna further includes a set of switches configured to manage operation between modes of operation. The transceiver path comprises a switching matrix operably connected to a set of transmitters configured for (i) transmitting signals via a first network, (ii) receiving signals via the first network, and (iii) transmitting signals via a second network. The receiver path comprises a receiver configured for receiving signals via the second network.

## Description

### TECHNOLOGICAL FIELD

Embodiments of the present disclosure are generally directed to configuring an antenna for communication across two or more networks.

### BACKGROUND

Typical approaches to feeding different elements of an antenna in a beam forming a dual constellation network include having two different dedicated transmit and receive chain for the two different networks. Such techniques necessitate certain resource requirements with respect to power and available hardware, for example, and also introduce additional costs given the hardwire requirements. Further, these techniques are also limited when it comes to the environments in which they can be implemented due to sheer size implications of the necessary hardware, for example.

As described, Applicant has discovered various technical problems associated with configuring antenna for use across multiple different networks. Through applied effort, ingenuity, and innovation, Applicant has solved many of these identified problems by developing the embodiments of the present disclosure, which are described in detail below.

### BRIEF SUMMARY

In accordance with a first aspect of the disclosure, an electronically steerable antenna is provided for use across multiple networks. In at least some embodiments, the electronically steerable antenna comprises: a diplexer connected to an indoor unit, the diplexer comprising a first port connected to a transceiver path configured to operate in a first mode of operation corresponding to a first set of frequencies and a second port connected to a receiver path configured to operate in a second mode of operation corresponding to a second set of frequencies, and a set of switches configured to manage operation between the first mode of operation and the second mode of operation. In at least some embodiments, the transceiver path comprises a switching matrix operably connected to a set of transmitters configured for (i) transmitting in a first subset of the first set of frequencies corresponding to transmission via a first network, (ii) receiving in a second subset of the first set of frequencies corresponding to reception via the first network, and (iii) transmitting in a third subset of the first set of frequencies corresponding to transmission via a second network. In at least some embodiments, the receiver path comprises a receiver configured for receiving in a first subset of the second set of frequencies corresponding to reception via the second network.

In at least some embodiments, the first network is a low earth orbit (LEO) network.

In at least some embodiments, the second network is a geosynchronous (GEO) network.

In at least some embodiments, the electronically steerable antenna further comprises one or more filters in the transceiver path and the receiver path.

In at least some embodiments the one or more filters comprise a first receive filter within the transceiver path configured to filter one or more signals received via the first network.

In at least some embodiments, the one or more filters comprise a first transmit filter within the transceiver path configured to filter one or more signals for transmission via the first network.

In at least some embodiments, the one or more filters comprise a second transmit filter within the transceiver path configured to filter one or more signals for transmission via the second network.

In at least some embodiments, the one or more filters comprise a second receive filter within the receiver path configured to filter one or more signals received via the second network.

In at least some embodiments, the set of switches manages reception via the second network with respect to the second mode of operation.

In at least some embodiments, the diplexer is configured to provide a required rejection in a global navigation satellite system (GNSS) band while the electronically steerable antenna is transmitting.

In at least some embodiments, the set of switches manages transmission and reception via the first network with respect to the first mode of operation.

In at least some embodiments, the set of switches manages transmission via the second network with respect to the first mode of operation.

In at least some embodiments, the electronically steerable antenna further comprises four common high-power transmitters configured for transmission via the first network and the second network.

In at least some embodiments, the first network is an Iridium network and the second network is an Inmarsat network.

In accordance with an additional aspect of the disclosure, a computer-implemented method for using an electronically steerable antenna across multiple networks is provided. The computer-implemented method is executable utilizing any of a myriad of computing device(s) and/or combinations of hardware, software, firmware. In at least some embodiments, the computer implemented method includes selecting a current mode of operation for an electronically steerable antenna from a first mode of operation and a second mode of operation, wherein switching into and out of the first mode of operation and the second mode of operation enables transitioning between a transceiver path associated with a first network and a second network and a receiver path associated with the second network, detecting a signal received via a diplexer of the electronically steerable antenna, and routing the signal between components of the electronically steerable antenna associated with either the transceiver path or the receiver path based on the current mode of operation.

In at least some embodiments, detecting a signal received via the diplexer includes verifying that the detected signal meets one or more signal parameters associated with the current mode of operation.

In at least some embodiments, the computer-implemented method further includes switching from the current mode of operation to an alternate mode of operation using a set of switches configured to manage operation between the first mode of operation and the second mode of operation.

In accordance with an additional aspect of the disclosure, a computer program product for using an electronically steerable antenna across multiple networks is provided. In at least some embodiments, the computer program product comprises at least one non-transitory computer-readable storage medium having computer program code stored thereon that, in execution with at least one processor, is configured to execute operations comprising: selecting a current mode of operation for an electronically steerable antenna from a first mode of operation and a second mode of operation, wherein switching into and out of the first mode of operation and the second mode of operation enables transitioning between a transceiver path associated with a first network and a second network and a receiver path associated with the second network, detecting a signal received via a diplexer of the electronically steerable antenna, and routing the signal between components of the electronically steerable antenna associated with either the transceiver path or the receiver path based on the current mode of operation.

### BRIEF DESCRIPTION OF THE DRAWINGS

Having thus described the embodiments of the disclosure in general terms, reference now will be made to the accompanying drawings, which are not necessarily drawn to scale, and wherein:
FIG. 1 illustrates a block diagram of a network environment that may be specially configured within which embodiments of the present disclosure may operate.
FIG. 2 illustrates a block diagram of an example apparatus that may be specially configured in accordance with at least some example embodiments of the present disclosure.
FIG. 3 illustrates a block diagram of an example RF chain for enabling antenna use across multiple networks in accordance with at least some example embodiments of the present disclosure.
FIG. 4 illustrates a flowchart depicting operations of an example process for configuring an antenna for in accordance with at least some example embodiments of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

### Overview

In the context of radiofrequency, it may be beneficial to configure a common radiofrequency frontend enabling use of an electronically steerable antenna across multiple networks with minimal hardware footprint. In conventional antenna configurations, two different dedicated transmit and receive chains are required to provide access across two networks, for example. This dual chain solution leads to increased power dissipation, increased weight, and higher costs associated with the implementation and management of both chains.

Embodiments of the present disclosure provide a myriad of technical advantages in the technical field of radiofrequency communications. Notably, embodiments of the present disclosure overcome the technical challenges of providing connectivity to multiple networks by providing a common frontend RF antenna implementation which enables satellite coverage across multiple networks. For example, the present methods, apparatuses, and computer program products may minimize the hardware necessary to provide dual constellation beams via a single antenna. By limiting the necessary hardware, embodiments of the present disclosure improve power consumption, limit costs, and provide increased usability by minimizing weight associated with the corresponding antenna implementations. Further yet, the present techniques can be configured on the fly based on network availability and current use/conditions. As such, the present techniques overcome the aforementioned limitations of existing dual band antennas, thereby improving hardware configured to provide connectivity across multiple satellite networks.

### Definitions

"Radio frequency front end" (or "RF front end") is a generic term referring to all circuitry between a receiver's antenna input up to and including the mixer stage. RF front end may refer to all of the components directly connected to an antenna, including amplifiers and filters. RF front end components are largely configured to manage initial signal reception from an antenna.

"Radio frequency chain" (or "RF chain,") is a generic term referring to an entire series of components that process a radiofrequency signal from the antenna to a final stage of signal processing, including the front end and any subsequent amplification stages. As such, an RF chain encompasses the RF front end as well as subsequent components.

"Electronically steerable antenna" (sometimes called an "ESA") refers to an antenna that can electronically change or reconfigure its beam pattern without moving physical parts. Electronically steerable antennas are controlled by software that can track and connect to multiple satellites simultaneously. Electronically steerable antennas can create a constructive interference pattern by shifting phases of each individual wave.

### Example Systems and Apparatuses of the Disclosure

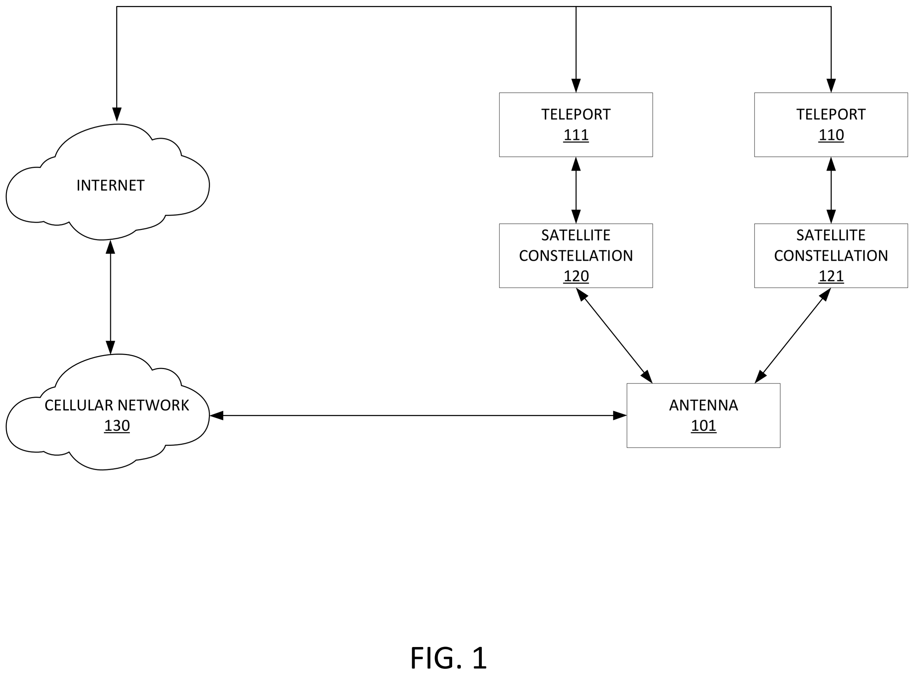

FIG. 1 illustrates a block diagram of a communication environment that may be specially configured within which embodiments of the present disclosure may operate. Specifically, FIG. 1 depicts an example communication environment 100. As depicted, the example communication environment 100 includes an antenna 101, teleport 110, teleport 111, satellite constellation 120, satellite constellation 121, and cellular network 130. Communication environment 100 corresponds to an example environment in which a dual band antenna as described herein may be employed for communication across multiple networks.

In at least some embodiments, antenna 101 is configured to communicate with one or more communication infrastructures (e.g., satellite, cellular, networks (e.g., the internet), etc.). Antenna 101 may be configured to perform dynamic beam steering to facilitate communication with various satellites, such as satellite constellation 120 and satellite constellation 121. In such cases, antenna 101 is able to dynamically change the direction of a beam that it generates to facilitate communication with a designated satellite. In at least some embodiments, antenna 101 is configured to generate two or more beams at the seam time, thereby enabling antenna 101 to communicate with more than one satellite at the same time. In such embodiments, antenna 101 is configured for multi-beam steering. Such functionality may be leveraged to enable antenna 101 to generate and use a first beam to communicate with a satellite of satellite constellation 120 while simultaneously generating a second beam to establish communication with a satellite of satellite constellation 121. After establishing communication with the satellite constellation 121, antenna 101 may be configured to stop generating the first beam to end communication with satellite constellation 120 while switching over to communicate with satellite constellation 121 using the second beam.

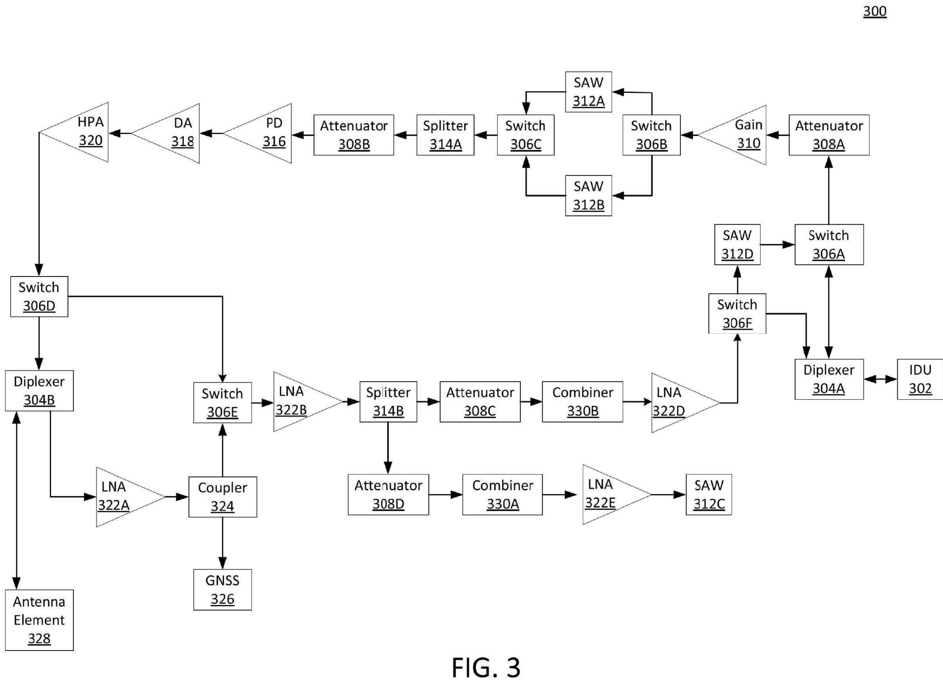

In some embodiments, antenna 101 is configured to leverage path diversity to enable a communication session via one communication path to continue during and after a handover with another communication path. For example, if antenna 101 is in communication with satellite constellation 120 and switches to satellite constellation 121 by dynamically altering its beam direction, the communication session with satellite constellation 120 may be combined with the session occurring with satellite constellation 121. In general, antenna 101 is configured to communicate with satellite constellation 120 and satellite constellation 121 cellular network 130, and any number of network infrastructures such as the Internet as depicted. In at least some embodiments, antenna 101 is additionally configured to include an RF chain, such as RF chain 300 described in detail with respect to FIG. 3.

Teleport 110 (also referred to as a satellite teleport, a telecommunications port, a satellite gateway, etc.) may be a ground station configured to connect a satellite network, such as satellite constellation 121, to a terrestrial network using wired or wireless signals to operate on the Earth's surface. In general, teleport 110 may be configured to facilitate communication between satellites of satellite constellation 121 and antenna 101, for example. Teleport 110 may be representative of a plurality of teleports configured to connect to satellite constellation 121.

Teleport 111 (also referred to as a satellite teleport, a telecommunications port, a satellite gateway, etc.) may be a ground station configured to connect a satellite network, such as satellite constellation 120, to a terrestrial network using wired or wireless signals to operate on the Earth's surface. In general, teleport 111 may be configured to facilitate communication between satellites of satellite constellation 120 and antenna 101, for example. Teleport 111 may be representative of a plurality of teleports configured to connect to satellite constellation 120.

Satellite constellation 120 may be a group of satellites or artificial satellites working together as a system. In at least some embodiments, satellite constellation 120 may be a geostationary (or geosynchronous) Earth orbit (GEO) satellite constellation, in which each satellite orbits the Earth at the same speed as the Earth's rotation, thereby enabling the satellite to maintain a fixed position above a specific region of Earth. Because of this fixed position, GEO satellite constellations provide continuous coverage to subject areas. GEO satellites may be used to: provide information for short term weather forecasting and tracking severe storms, provide data on atmospheric conditions and solar activity, thereby informing climate condition information, provide search and rescue data operations, and provide biomass burning and wildfire monitoring information. It should be appreciated that, though FIG. 1 refers to and depicts a satellite constellation 120, there exist additional embodiments pertinent to a single satellite in the place of satellite constellation 120. Satellite constellation 121 may be associated with an Iridium network.

Satellite constellation 121 may be a group of satellites or artificial satellites working together as a system. In at least some embodiments, satellite constellation 121 may be a low Earth orbit (LEO) satellite constellation, in which each satellite orbits the Earth with a period of 128 minutes or less. LEO satellites may be used to provide low-latency internet services, set up private communications networks, complement high-speed, low-latency air-to-ground networks, and generally provide increased network resilience and faster data transmission. Satellite constellation 121 may be associated with an Inmarsat network.

Cellular network 130 may be any wireless communication system allowing mobile devices to connect to the internet, make calls, send and receive messages, and the like. In general, a cellular network (or mobile network) refers to any telecommunications network where a link to and from end nodes is wireless and the network is distributed over land areas (called cells) serviced by at least one fixed-location transceiver.

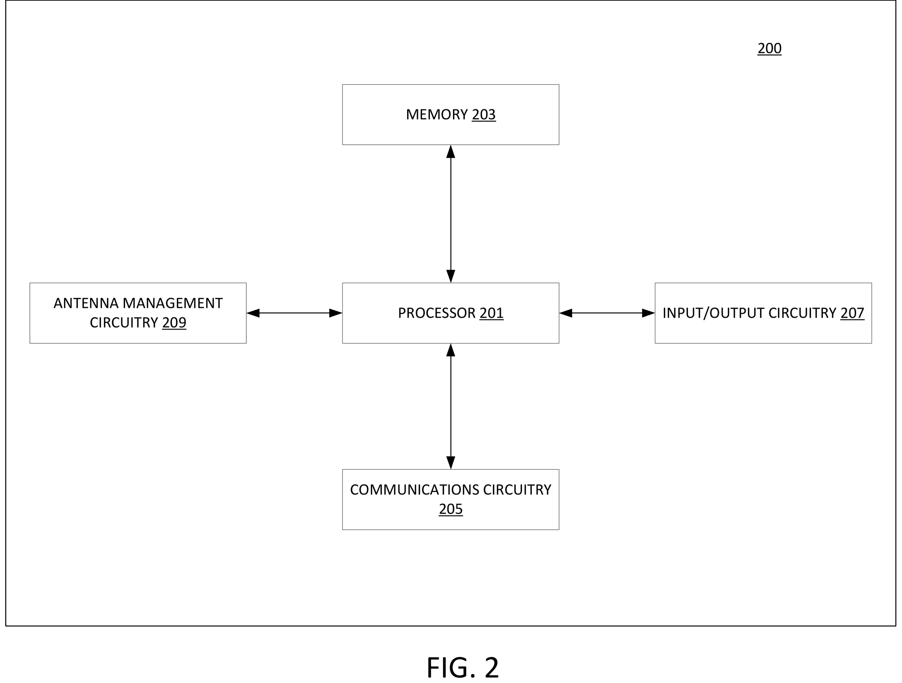

FIG. 2 illustrates a block diagram of an example apparatus 200 that may be specially configured in accordance with at least some example embodiments of the present disclosure. The apparatus 200 may carry out functionality and processes described herein to control and configure an electronically steerable antenna for operation across multiple networks. In some embodiments, the apparatus 200 includes a processor 201, memory 203, communications circuitry 205, input/output circuitry 207, and antenna management circuitry 209. In some embodiments, the apparatus 200 is configured, using one or more of the processor 201, memory 203, communications circuitry 205, input/output circuitry 207, and/or antenna management circuitry 209, to execute and perform the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, controlling, modifying, outputting, restoring, processing, displaying, storing, determining, creating/generating, predicting, monitoring, evaluating, comparing, and/or similar terms used herein interchangeably. In one embodiment, these functions, operations, and/or processes may be performed on data, content, information, and/or similar terms used herein interchangeably. In this regard, the apparatus 200 embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Additionally, or alternatively, in some embodiments, other elements of the apparatus 200 provide or supplement the functionality of another particular set of circuitry. For example, the processor 201 in some embodiments provides processing functionality to any of the sets of circuitry, the memory 203 provides storage functionality to any of the sets of circuitry, the communications circuitry 205 provides network interface functionality to any of the sets of circuitry, and/or the like.

In some embodiments, the processor 201 (and/or co-processor or any other processing circuitry assisting or otherwise associated with the processor) is/are in communication with the memory 203 via a bus for passing information among components of the apparatus 200. In some embodiments, for example, the memory 203 is non-transitory and may include, for example, one or more volatile and/or non-volatile memories. In other words, for example, the memory 203 in some embodiments includes or embodies an electronic storage device (e.g., a computer readable storage medium). In some embodiments, the memory 203 is configured to store information, data, content, applications, instructions, or the like, for enabling the apparatus 200 to carry out various functions in accordance with example embodiments of the present disclosure (e.g., controlling operation of an electronically steerable antenna, one or more switches/switching matrices of an antenna, and/or the like).

The processor 201 may be embodied in a number of different ways. For example, in some embodiments, the processor 201 includes one or more processing devices configured to perform independently. Additionally, or alternatively, in some embodiments, the processor 201 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the apparatus 200, and/or one or more remote or "cloud" processor(s) external to the apparatus 200.

In an example embodiment, the processor 201 is configured to execute instructions stored in the memory 203 or otherwise accessible to the processor. Additionally, or alternatively, the processor 201 in some embodiments is configured to execute hard-coded functionality. As such, whether configured by hardware or software methods, or by a combination thereof, the processor 201 represents an entity (e.g., physically embodied in circuitry) capable of performing operations according to an embodiment of the present disclosure while configured accordingly. Additionally, or alternatively, as another example in some example embodiments, when the processor 201 is embodied as an executor of software instructions, the instructions specifically configure the processor 201 to perform the algorithms embodied in the specific operations described herein when such instructions are executed.

As one particular example embodiment, the processor 201 is configured to perform various operations associated with configuring an antenna for dual beam constellation. In some embodiments, the processor 201 includes hardware, software, firmware, and/or the like, that obtain signal data, provide control operations corresponding to an electronically steerable antenna, and the like.

In some embodiments, the apparatus 200 includes input/output circuitry 207 that provides output to a user and, in some embodiments, receives an indication of a user input. In various embodiments, the user is an operator of apparatus 200 responsible for controlling a corresponding antenna. In some embodiments, the input/output circuitry 207 is in communication with the processor 201 to provide such functionality. The input/output circuitry 207 may comprise one or more user interface(s) and in some embodiments includes a display that comprises the interface(s) rendered as a web user interface, an application user interface, a user device, a backend system, or the like. In some embodiments, the input/output circuitry 207 also includes a keyboard, a mouse, a joystick, vehicle controls (e.g., steering, power, braking, and/or the like), a touch screen, touch areas, soft keys a microphone, a speaker, and/or other input/output mechanisms. The processor 201 and/or input/output circuitry 207 comprising the processor may be configured to control one or more functions of one or more user interface elements through computer program instructions (e.g., software and/or firmware) stored on a memory accessible to the processor 201 (e.g., memory 203, and/or the like). In some embodiments, the input/output circuitry 207 includes or utilizes a user-facing application to provide input/output functionality to a display of an operator computing device, passenger computing device, and/or the like.

In some embodiments, the apparatus 200 includes communications circuitry 205. The communications circuitry 205 includes any means such as a device or circuitry embodied in either hardware or a combination of hardware and software that is configured to receive and/or transmit data from/to a network and/or any other device, circuitry, or module in communication with the apparatus 200. In this regard, in some embodiments the communications circuitry 205 includes, for example, a network interface for enabling communications with a wired or wireless communications network, such as the networks shown in FIG. 1 and described herein. Additionally, or alternatively in some embodiments, the communications circuitry 205 includes one or more network interface card(s), antenna(s), bus(es), switch(es), router(s), modem(s), and supporting hardware, firmware, and/or software, or any other device suitable for enabling communications via one or more communications network(s). Additionally, or alternatively, the communications circuitry 205 includes circuitry for interacting with the antenna(s) and/or other hardware or software to cause transmission of signals via the antenna(s) or to handle receipt of signals received via the antenna(s).

The antenna management circuitry 209 includes hardware, software, firmware, and/or a combination thereof, that carry out processes for controlling an electronically steerable antenna. For example, in some contexts, the antenna management circuitry 209 includes hardware, software, firmware, and/or the like, that process signal data to determine a current mode of operation corresponding to an antenna. In some embodiments, the antenna management circuitry 209 includes hardware, software, firmware, and/or the like, that issue control operations to a matrix of switches configured to manage the antenna's mode of operation. For example, the antenna management circuitry 209 may process current signal data to determine that a managed antenna is currently configured in a second mode of operation enabling signals to be received via a second network. Antenna management circuitry 209 may additionally be configured to process one or more network conditions to determine a desired mode of operation corresponding to the antenna. For example, antenna management circuitry 209 may be configured to analyze expected network traffic (based on scheduled/regularly received signals, for example). Antenna management circuitry 209 may further be configured to determine a desired mode of operation corresponding to the analysis of the expected network traffic, and may subsequently issue an instruction to place the antenna into the desired mode of operation. Such an instruction may include using the switching matrix to put the antenna into the desired mode of operation. In some embodiments, the antenna management circuitry 209 includes a separate processor, specially configured field programmable gate array (FPGA), and/or a specially programmed application specific integrated circuit (ASIC).

Additionally, or alternatively, in some embodiments, two or more of the processor 201, memory 203, communications circuitry 205, input/output circuitry 207, and/or antenna management circuitry 209 are combinable. Additionally, or alternatively, in some embodiments, one or more of the sets of circuitry perform some or all of the functionality described associated with another component. For example, in some embodiments, two or more of the sets of circuitry 201-209 are combined into a single module embodied in hardware, software, firmware, and/or a combination thereof. Similarly, in some embodiments, one or more of the sets of circuitry, for example the memory 203, communication circuitry 205, and/or antenna management circuitry 209 is/are combined with the processor 201, such that the processor 201 performs one or more of the operations described above with respect to each of these sets of circuitry 203-209.

FIG. 3 illustrates an example radio frequency (RF) chain 300 in accordance with at least one embodiment of the present invention. As depicted, the RF chain 300 includes an indoor unit 302, diplexers 304 (304A, 304B), switches 306 (306A, 306B, 306C, 306D, 306E), attenuators 308 (308A, 308B, 308C, 308D), gain block 310, SAW elements 312 (312A, 312B, 312C, 312D), splitters 314 (314A, 314B, 314C, 314D), pre-driver (PD) 316, driver amplifier (DA) 318, high-powered amplifier 320, low-noise amplifier 322 (322A, 322B, 322C, 322D), coupler 324, global navigation satellite system (GNSS) 326, and antenna element 328. RF chain 300 may correspond to a front-end configuration enabling use of an electronically steerable antenna with respect to at least two networks.

Indoor unit (IDU) 302 is a device or component configured to provide communication between the components of RF chain 300 and a subject device. In general, IDU 302 is configured to interface with a control unit corresponding to the subject device to either receive information from said device for transmission via the RF chain 300 or transmit information received via the RF chain 300 to said device.

Each diplexer 304 (304A, 304B) is a device configured to combine or separate signals at different frequencies. In at least some embodiments, each diplexer 304 is a passive radio frequency filter component configured with three ports (two input ports and one output port). Generally, each diplexer 304 is a passive device configured to implement frequency-domain multiplexing. Specific operations corresponding to each diplexer 304 are described below with respect to the paths as depicted.

Each switch 306 (306A, 306B, 306C, 306D, 306E) is a device configured to route high-frequency signals through corresponding transmission paths. In general, each switch 306 is configured to route signals according to the paths as depicted; specific operations corresponding to each switch 306 are described below. In general, the switches 306 enable transitioning between a transceiver path associated with a first network and a second network and a receiver path associated with the second network.

Each attenuator 308 (308A, 308B, 308C, 308D) is a component configured to reduce the strength of a received signal. In at least some embodiments, each attenuator 308 comprises an arrangement of resistors configured to provide the subject reduction. In general, each attenuator 308 is configured to absorb or reflect some or all radiofrequency energy that passes through, thus reducing the corresponding signal's level without distorting it.

Gain block 310 is a device configured to increase the strength of low-level radio frequency signals for transmission. Gain block 310 may be configured to increase the amplitude of a received signal without altering its waveform. In general, gain block 310 is configured to aid signal conditioning by ensuring that signals are strong enough for further processing or transmission.

Each SAW element 312 (312A, 312B, 312C, 312D) is a wireless, passive, noncontact sensing system including an SAW sensing element and a reader. The reader of a subject SAW element 312 is configured to launch an interrogation signal which is picked up by the sensor's antenna. The sensing element works as a passive back-scatterer reflecting the interrogation signal back to the reader. The backscattered signal reflects the frequency of oscillation affected by a physical measurand. In general, each SAW element 312 is used to filter and otherwise control frequencies.

Each splitter 314 (314A, 314B) is a device configured to split a single output signal into multiple output signals. Each splitter 314 may correspond to either a passive splitter configured using circuits of resistors and capacitors or an active splitter configured to amplify and distribute the signal. Each splitter 314 may be configured to divide an input signal's power equally or proportionally between the output signals. Each splitter 314 may correspond to a combiner component used in reverse. In general, each splitter 314 enables distribution of signals to multiple components within RF chain 300. Specific operations corresponding to each splitter 314 are described below with respect to the paths as depicted.

Pre-driver (PD) 316 is a device that is configured to boost an RF signal before it is sent to a driver or a power amplifier. Generally, pre-driver 316 is configured to receive a (weak) signal, increase its power level, and subsequently provide the altered signal to a driver or a power amplifier (such as driver amplifier 318).

Driver amplifier (DA) 318 (also called a driver) is a component configured to provide enough power to drive a subsequent high-power amplifier, such as high-power amplifier 320. In at least some embodiments, DA 318 is configured to source and sink sufficient current at an operating frequency to drive a low-impedance load. In general, DA 318 acts as an intermediary between a low-power signal source and a final power amplifier, effectively ensuring that the signal maintains fidelity and sufficient strength to be effectively transmitted.

High-power amplifier (HPA) 320 is a component or electronic device configured to significantly increase a radio frequency signal's power. High-power amplifiers are often utilized in the final stage of a transmitter to drive an antenna.

Each low-noise amplifier (LNA) 322 (322A, 322B, 322C, 322D) is a component configured to amplify a low-power signal without significantly degrading its signal-to-noise ratio. In at least some embodiments, each low-noise amplifier 322 is configured to provide amplification while minimizing the additional noise introduced. Each low-noise amplifier 322 may be configured using specific operating points, circuit topologies, and/or special components configured to provide amplification while minimizing additional noise.

Coupler 324 is a component configured to split, distribute, combine, or sample one or more RF signals. In at least some embodiments, coupler 324 is a passive device used to connect RF circuit embodiments as described. Coupler 324 may be embodied as a directional coupler, a hybrid coupler, a dual directional coupler, and/or an impedance transforming coupler with respect to various embodiments of the present invention.

Global navigation satellite system (GNSS) 326 is a network of satellites that provide positioning, navigation, and timing (PNT) services. With respect to the depicted embodiment, GNSS 326 may correspond to a component or a collection of components configured to interface with one or more GNSS systems. In general, GNSS 326 refers to a device, circuitry, or other component configured to communicate with a global navigation satellite system. Antenna element 328 is any physical antenna device capable of transmitting and receiving radio waves.

Each combiner 330 (330A, 330B) is configured to combine multiple signals into one output signal. In at least some embodiments, each combiner 330 is implemented as a passive network of resistors, inductors, and capacitors configured to combine two or more signals. In at least some embodiments, each combiner 330 is configured to align the phases of the signals to increase the power level of the combined signal. Each combiner 330 may correspond to a splitter component used in reverse.

RF chain 300 depicts signal flow(s) in accordance with at least some embodiments of the present invention. The signal flow is directional as depicted between components. It should be appreciated that RF chain 300 depicts one example front-end configuration enabling use of an electronically steerable antenna with respect to at least two networks. Many additional embodiments exist comprising any number of combinations and sub-combinations of the depicted components. RF chain 300 will now be described by following signal through the configuration with respect to various intended operations and corresponding paths.

IDU 302 may be configured to receive a first signal from a control panel or other control interface of a subject device to be transmitted via a first network. As depicted, IDU 302 provides the first signal to a first diplexer 304A. Diplexer 304A is configured to separate the first signal from other received signals, and provide the first signal to a first switch 306A. In at least some embodiments, diplexer 304A is generally configured to separate the first signal for transmission in a first network and/or a second network and provide the first signal once separated to the first switch 306A. In at least some embodiments, diplexer 304A is configured to separate signals within a frequency range of 1616 MHz to 1676 MHz to be provided to the first switch 306A.

Switch 306A is configured to receive the first signal from the diplexer 304A and route it to a first attenuator 308A. In at least some embodiments, switch 306A is connected to a transmission path via which the first signal is provided to attenuator 308A and a reception path via which signals are received. In at least some embodiments, switch 306A is configured to transmit the first signal to the transmission path automatically responsive to detecting that the first signal is received from diplexer 304A. In at least some embodiments, switch 306A is set to the transmission path according to an instruction to facilitate transmitting the first signal to the transmission path.

Attenuator 308A is configured to receive the first signal from the switch 306A and reduce the strength of the received signal. In at least some embodiments, attenuator 308A is configured to reduce the level of the first signal prior to providing the first signal to a gain block 310. In at least some embodiments, attenuator 308A is configured to reduce the level of the first signal to below a defined threshold. If the first signal is already below the defined threshold, the first signal may be transmitted or otherwise provided to gain block 310 without its strength being reduced.

Gain block 310 is configured to receive the first signal from the attenuator 308A (or the switch 306A, in instances where the first signal is not provided to the attenuator 308A for any reason). In at least some embodiments, gain block 310 is configured to increase the strength of the first signal and subsequently provide the first signal to switch 306B. Gain block 310 may be configured to increase the strength of the first signal to at least a defined threshold. If the first signal's strength already exceeds the defined threshold, gain block 310 may be configured to provide the first signal to switch 306B without altering its strength (or may be excluded entirely).

Switch 306B is configured to receive the first signal from the gain block 310 and route it to either SAW element 312A or SAW element 312B. In at least some embodiments, switch 306B is connected to a first network transmission path comprising a first SAW element 312A and a second network transmission path comprising a second SAW element 312B. In at least some embodiments, switch 306B is configured to provide the first signal to SAW element 312A for transmission via a first network or to the SAW element to 312B for transmission via the second network. In at least some embodiments, switch 306B is configured to transmit the first signal to SAW element 312A based on detecting the first signal's frequency corresponds to the first network. In at least some embodiments, switch 306B is configured to transmit the first signal to SAW element 312B based on detecting the first signal's frequency corresponds to the second network.

SAW element 312A is configured to receive and filter the first signal and subsequently provide the first signal to switch 306C. SAW element 312A may be configured to filter the first signal according to one or more properties of the first network. Similarly, SAW element 312B is configured to receive and filter the first signal and subsequently provide the first signal to switch 306C. SAW element 312B may be configured to filter the first signal according to one or more properties of the second network.

Splitter 314A may be configured to split the first signal into a first set of signals to enable distribution amongst a plurality of components. In at least some embodiments, splitter 314A is configured to provide the first set of signals to a plurality of antenna paths. While only one antenna path and corresponding set of components (attenuator 308B, PD 316, DA 318, HPA 320, etc.) is depicted with respect to FIG. 3, it should be appreciated that additional antenna paths may be present and connected to splitter 314A. Further, it should be appreciated that, as used with respect to the components occurring after splitter 314A in the RF chain 300, the term "first signal" is used to refer to one of the splitter outputs corresponding to the first signal. In at least some embodiments, splitter 314A is a 1:4 splitter.

Attenuator 308B is configured to receive the first signal from the splitter 314A and reduce the strength of the first signal. In at least some embodiments, attenuator 308B is configured to reduce the level of the first signal prior to providing the first signal to a pre-driver 316. In at least some embodiments, attenuator 308B is configured to reduce the level of the first signal to below a defined threshold. If the first signal is already below the defined threshold, the first signal may be transmitted or otherwise provided to pre-driver 316 without its strength being reduced.

Pre-driver 316 is configured to receive the first signal from attenuator 308B (or splitter 314A in embodiments wherein attenuator 308B is bypassed/excluded). In at least some embodiments, pre-driver 316 is configured to boost the first signal before it is sent to a driver or power amplifier. In at least some embodiments, pre-driver 316 is configured to increase the strength of the first signal to at least a defined threshold. If the first signal is already above the defined threshold, the first signal may be transmitted or otherwise provided to driver amplifier 318 without its strength being increased. In at least some embodiments, such as those where the first signal's strength exceeds a second threshold corresponding to the driver amplifier and/or the high-power amplifier, the first signal may bypass these components entirely (functionally or literally); in such embodiments, the attenuator 308B (or the splitter 314A) is configured to provide the first signal to switch 306D without increasing the first signal's strength.

Driver amplifier 318 is configured to receive the first signal from pre-driver 316 and provide enough power to drive high-power amplifier 320. High-power amplifier (HPA) 320 is configured to receive the first signal via driver amplifier 318 and significantly increase the first signal's power. In at least some embodiments, HPA 320 is configured to provide the first signal to switch 306D.

Switch 306D is configured to receive the first signal from the HPA 320 (or a preceding element) and route it to diplexer 304B. In at least some embodiments, switch 306D is connected to a transceiver path via which the first signal is provided to diplexer 304B and a reception path via which signals are routed to switch 306E. In at least some embodiments, switch 306D is configured to transmit the first signal to the transmission path automatically responsive to detecting that the first signal is received from HPA 320. In at least some embodiments, switch 306D is set to the transmission path according to an instruction to facilitate transmitting the first signal to the transmission path. In at least some embodiments, the transceiver path is associated with transmission and reception in a first network and/or transmission in a second network, while the reception path is associated with reception in a second network.

Diplexer 304B is configured to separate the first signal from other received signals, and provide the first signal to an antenna element. In at least some embodiments, diplexer 304B is generally configured to separate the first signal for transmission in a first network and/or a second network (or reception in a second network) and provide the first signal once separated to the antenna element 328.

Antenna element 328 is configured to receive the first signal from diplexer 304B and transmit the first signal via the target (i.e., first or second) network(s). Antenna element 328 may be embodied as any known antenna element capable of communications with one or more networks/network devices, as described with respect to FIG. 1, for example.

Antenna element 328 is additionally configured to receive a second signal via a second network and/or a third signal via a first network. With respect to the second signal, antenna element 328 is configured to provide the second signal to diplexer 304B. Diplexer 304 B is configured to separate the second signal from other received signals, and provide the second signal to a low-noise amplifier (LNA) 322A.

LNA 322A is configured to receive the second signal from diplexer 304B. In at least some embodiments, LNA 322A is configured to amplify the second signal without significantly degrading its signal-to-noise ratio. LNA 322A may be configured to provide the second signal to coupler 324.

Coupler 324 is configured to receive the second signal from LNA 322A. In at least some embodiments, coupler 324 is configured to split the second signal between GNSS 326 and switch 306E. In at least some embodiments, coupler 324 is embodied in a 15 decibel configuration, providing one output 15 dB below the input signal level and another "main line" output exhibiting very little loss relative to the received signal strength. In at least some embodiments, coupler 324 is configured to provide a required rejection in a GNSS band to the GNSS 326 while the electronically steerable antenna is transmitting.

Switch 306E is configured to receive the second signal from the coupler 324 (or a preceding element) and route it to LNA 322B. In at least some embodiments, switch 306D is configured to transmit the second signal to a second reception path automatically responsive to detecting that the second signal is received from coupler 324. In at least some embodiments, the second reception path is associated with reception in a second network.

LNA 322B is configured to receive the second signal from switch 306E. In at least some embodiments, LNA 322B is configured to amplify the second signal without significantly degrading its signal-to-noise ratio. LNA 322B may be configured to provide the second signal to a splitter 314B.

Splitter 314B may be configured to split the second signal into a second set of signals to enable distribution amongst a plurality of components. In at least some embodiments, splitter 314B is configured to provide the second set of signals to attenuator 308C and attenuator 308D. It should be appreciated that, as used with respect to the components occurring after splitter 314B in the RF chain 300, the term "second signal" is used to refer to one of the splitter outputs corresponding to the second signal. In at least some embodiments, splitter 314B is a 1:2 splitter as depicted.

Attenuator 308D is configured to receive the second signal from the splitter 314B and reduce the strength of the second signal. In at least some embodiments, attenuator 308D is configured to reduce the level of the second signal prior to providing the second signal to a combiner 330A. In at least some embodiments, attenuator 308D is configured to reduce the level of the second signal to below a defined threshold. If the second signal is already below the defined threshold, the second signal may be transmitted or otherwise provided to combiner 330A without its strength being reduced.

Combiner 330A is configured to receive input signals from attenuator 308D and one or more additional antenna embodiments configured for reception with respect to the second network. In at least some embodiments, combiner 330A is configured to combine the received input signals to provide a single output signal. The output signal provided by combiner 330A is hereinafter referred to as a first combined signal. Combiner 330A is configured to provide the first combined signal to LNA 322E.

LNA 322E is configured to receive the first combined signal from combiner 330A. In at least some embodiments, LNA 322E is configured to amplify the first combined signal without significantly degrading its signal-to-noise ratio. LNA 322E may be configured to provide the first combined signal to SAW element 312C.

SAW element 312C is configured to receive and filter the first combined signal and subsequently provide the first output signal to one or more external applications, such as a network tracking application. SAW element 312A may be configured to filter the first combined signal according to one or more properties of the second network.

Attenuator 308C is configured to receive the second signal from the splitter 314B and reduce the strength of the second signal. In at least some embodiments, attenuator 308C is configured to reduce the level of the second signal prior to providing the second signal to a combiner 330B. In at least some embodiments, attenuator 308C is configured to reduce the level of the second signal to below a defined threshold. If the second signal is already below the defined threshold, the second signal may be transmitted or otherwise provided to combiner 330B without its strength being reduced.

Combiner 330B is configured to receive input signals from attenuator 308C and one or more additional antenna embodiments configured for reception with respect to the second network. In at least some embodiments, combiner 330B is configured to combine the received input signals to provide a single output signal. The output signal provided by combiner 330B is hereinafter referred to as a second combined signal. Combiner 330A is configured to provide the second combined signal to LNA 322D.

LNA 322D is configured to receive the second combined signal from combiner 330B. In at least some embodiments, LNA 322D is configured to amplify the second combined signal without significantly degrading its signal-to-noise ratio. LNA 322D may be configured to provide the second combined signal to switch 306F.

Switch 306F is configured to receive the second combined signal from the LNA 322D (or a preceding element) and route it to SAW element 312D. In at least some embodiments, switch 306F is configured to transmit the second combined signal to switch 306A. In at least some embodiments, switch 306A is configured with a reception path corresponding to the second network.

In embodiments, where the second combined signal corresponds to a first network, rather than a second network, switch 306 F is configured to route the second combined signal to the diplexer 304A. In such embodiments, the diplexer 304A may further be configured to transmit the second combined signal to the indoor unit 302. In at least some embodiments, the diplexer 304A is configured to provide signals within a frequency range of 1518 MHz to 1559 MHz to the indoor unit 302.

It should be appreciated that, in certain embodiments of RF chain 300, a phase shifting network may be implemented between depicted components of the RF chain 300. A phase shifting network refers to a circuit configured to alter the phase of a signal by feeding the output of an amplifier back to its input. As such, a phase shifting network may be implemented with respect to any number of the depicted amplifiers. In at least one embodiment, a phase shifting network may be implemented between pre-driver 316 and driver amplifier 318, (ii) between attenuator 308D and combiner 330A, and (iii) between attenuator 308C and combiner 330B. In general, a phase shifting network may be implemented between any number of the depicted components of RF chain 300.

As described herein, the various signals and their intentions may be defined according to the frequencies via which they are transmitted. Each of the described signals and their corresponding transmission/reception with respect to the first network and the second network may correspond to a defined set of frequencies; as such, each corresponding mode of operation may correspond to a set of frequencies accordingly. For example, a first mode of operation may be configured to manage signals within a first set of frequencies and the second mode of operation may be configured to manage signals within a second set of frequencies. As such, the first mode of operation may enable transmitting in a first subset of the first set of frequencies corresponding to transmission via the first network, receiving in a second subset of the first set of frequencies corresponding to reception via the first network, and transmission in a third subset of the first set of frequencies corresponding to transmission via the second network. Similarly, the second mode of operation may enable receiving in a first subset of the second set of frequencies corresponding to reception via the second network. The first subset of the second set of frequencies may encompass the entire second set of frequencies.

### Example Processes of the Disclosure

Having described example systems and apparatuses in accordance with the disclosure, example processes of the disclosure will now be discussed. It will be appreciated that each of the flowcharts depicts an example computer-implemented process that is performable by one or more of the apparatuses, systems, devices, and/or computer program products described herein, for example utilizing one or more of the specially configured components thereof.

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally, or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Similarly, it should be appreciated that one or more of the operations of each flowchart may be combinable, replaceable, and/or otherwise altered as described herein.

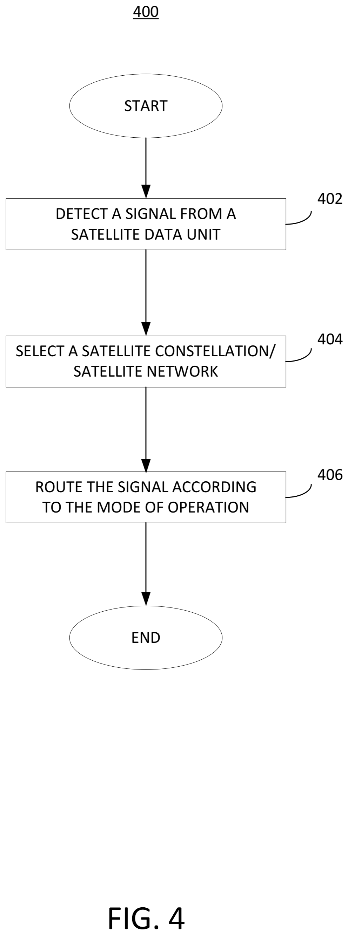

FIG. 4 illustrates a flowchart depicting operations of an example process 400 for controlling an electronically steerable antenna in accordance with at least some example embodiments of the present disclosure. In some embodiments, the process 400 is embodied by computer program code stored on a non-transitory computer-readable storage medium of a computer program product configured for execution to perform the process as depicted and described. Additionally, or alternatively, in some embodiments, the process 400 is performed by one or more specially configured computing devices, such as apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 203 and/or another component depicted and/or described herein and/or otherwise accessible to the apparatus 200, for performing the operations as depicted and described. In some embodiments, the apparatus 200 is in communication with one or more internal or external apparatus(es), system(s), device(s), and/or the like, to perform one or more of the operations as depicted and described. It should be appreciated that, though FIG. 4 defines a method by which apparatus 200 selects a mode of operation for an antenna and otherwise manages antenna operation, embodiments exist wherein the mode of operation is defined and automatically selected, and therefore such a method is not necessarily executed.

At operation 402, the apparatus 200 is configured to detect a signal received via a satellite data unit (SDU). In at least some embodiments, the SDU is a device installed in a vehicle enabling air/ground communication via a satellite network. In at least some embodiments, the SDU is configured for communication via an LEO satellite network, and thus the detected signal corresponds to a communication via said LEO satellite network. In some embodiments, the SDU is configured for communication via a GE) network, and thus the detected signal corresponds to a communication via said GEO network. In at least some embodiments, the subject signal is detected/received via a diplexer of the antenna. In at least some embodiments, the antenna's diplexer may be configured to receive signals intended for transmission from a control unit of a connected device. Such transmission signals may be intended for transmission via either a first network or a second network. Transmission via the first network and transmission via the second network may be enabled by the antenna configuration being set to a first operational mode associated with the first network. In at least some embodiments, the antenna's diplexer may be configured to receive signals from an external source. Such received signals may be received via a first network or a second network. Reception via the first network may be enabled by the antenna configuration being set to a first operational mode associated with the first network. Reception via the second network may be enabled by the antenna configuration being set to a second operational mode associated with the second network. In at least some embodiments, the antenna may be configured in a first or second operational mode based on the type of SDU to which it is connected.

At operation 404, the apparatus 200 is configured to selecting a satellite constellation/satellite network corresponding to the detected signal. Responsive to selecting a first network (or first satellite constellation), the apparatus is configured to route the signal according to a first mode of operation. Responsive to selecting a second network (or second satellite constellation), the apparatus is configured to route the signal according to a second mode of operation. Each mode of operation may describe a configuration of switches/switch matrices enabling communication via the corresponding network. As such, selecting a satellite constellation/satellite network corresponding to the detected signal includes selecting a network via which the antenna can appropriately communicate according to a current mode of operation. In at least some embodiments, selecting a satellite constellation/satellite network occurs based on a defined protocol/mode of operation corresponding to the SDU via which the detected signal was received.

At operation 406, the apparatus 200 is configured to route the signal according to the current mode of operation. An RF chain corresponding to the subject antenna can comprise a plurality of RF components. The one or more switches (or switch matrices) are configured to direct signals appropriately through the plurality of components based on the signal/network type. As such, apparatus 200 may be configured to issue an instruction to send the signal through the corresponding RF chain when the switches in the RF chain are configured appropriately according to the current mode of operation. Generally, apparatus 200 may be configured to trigger transmission/reception of the corresponding signal according to the current mode of operation and the corresponding current switch configuration.

### Conclusion

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random-access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

In some embodiments, some of the operations above may be modified or further amplified. Furthermore, in some embodiments, additional optional operations may be included. Modifications, amplifications, or additions to the operations above may be performed in any order and in any combination.

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. An electronically steerable antenna for L-band satellite communication, the electronically steerable antenna comprising:
a diplexer connected to an indoor unit, the diplexer comprising a first port connected to a transceiver path configured to operate in a first mode corresponding to a first set of frequencies and a second port connected to a receiver path configured to operate in a second mode corresponding to a second set of frequencies,
wherein the transceiver path comprises a switching matrix operably connected to a set of transmitters configured for (i) transmitting in a first subset of the first set of frequencies corresponding to transmission via a first network, (ii) receiving in a second subset of the first set of frequencies corresponding to reception via the first network, and (iii) transmission in a third subset of the first set of frequencies corresponding to transmission via a second network, and
wherein the receiver path comprises a receiver configured for receiving in a first subset of the second set of frequencies corresponding to reception via the second network; and
a set of switches configured to manage operation between the first mode of operation and the second mode of operation.

2. The electronically steerable antenna of claim 1, wherein the first network is a low earth orbit (LEO) network.

3. The electronically steerable antenna of claim 1, wherein the second network is a geosynchronous (GEO) network.

4. The electronically steerable antenna of claim 1, further comprising one or more filters in the transceiver path and the receiver path.

5. The electronically steerable antenna of claim 4, the one or more filters comprising a first receive filter within the transceiver path configured to filter one or more signals received via the first network.

6. The electronically steerable antenna of claim 4, the one or more filters comprising a first transmit filter within the transceiver path configured to filter one or more signals for transmission via the first network.

7. The electronically steerable antenna of claim 4, the one or more filters comprising a second transmit filter within the transceiver path configured to filter one or more signals for transmission via the second network.

8. The electronically steerable antenna of claim 4, the one or more filters comprising a second receive filter within the receiver path configured to filter one or more signals received via the second network.

9. The electronically steerable antenna of claim 1, wherein the set of switches manages reception via the second network with respect to the second mode of operation.

10. The electronically steerable antenna of claim 1, wherein the diplexer is configured to provide a required rejection in a global navigation satellite system (GNSS) band while the electronically steerable antenna is transmitting.

11. The electronically steerable antenna of claim 1, wherein the set of switches manages transmission and reception via the first network with respect to the first mode of operation.

12. The electronically steerable antenna of claim 11, wherein the set of switches manages transmission via the second network with respect to the first mode of operation.

13. The electronically steerable antenna of claim 1, further comprising four common high-power transmitters configured for transmission via the first network and the second network.

14. A computer-implemented method comprising:
selecting a current mode of operation for an electronically steerable antenna from a first mode of operation and a second mode of operation, wherein switching into and out of the first mode of operation and the second mode of operation enables transitioning between a transceiver path associated with a first network and a second network and a receiver path associated with the second network;
detecting a signal received via a diplexer of the electronically steerable antenna; and
routing the signal between components of the electronically steerable antenna associated with either the transceiver path or the receiver path based on the current mode of operation.

15. A computer program product comprising at least one non-transitory computer-readable storage medium having computer program code stored thereon that, in execution with at least one processor, is configured to execute operations comprising:
selecting a current mode of operation for an electronically steerable antenna from a first mode of operation and a second mode of operation, wherein switching into and out of the first mode of operation and the second mode of operation enables transitioning between a transceiver path associated with a first network and a second network and a receiver path associated with the second network;
detecting a signal received via a diplexer of the electronically steerable antenna; and
routing the signal between components of the electronically steerable antenna associated with either the transceiver path or the receiver path based on the current mode of operation.
